# FASCICULE DE BREVET EUROPEEN

(11) **EP 4 405 746 B1**
(45) Date de publication et mention de la délivrance du brevet: **10.09.2025**
(21) Numéro de dépôt: 22789522.4
(22) Date de dépôt: 15.09.2022
(51) Int. Cl.: G03B 9/06, G02B 5/00

(54) **DIAPHRAGME À IRIS ELLIPTIQUE SANS ROTATION**
NICHTROTIERENDE ELLIPTISCHE IRISBLENDE
NON-ROTATING ELLIPTICAL IRIS DIAPHRAGM

(30) Priorité: 21.09.2021 FR 2109913
(43) Date de publication de la demande: 31.07.2024
(73) Titulaire: THALES, 92190 Meudon (FR)
(72) Inventeur: MONTAGNE, Laurent, 69100 VILLEURBANNE (FR)
(74) Mandataire: Atout PI Laplace
(86) Numéro de dépôt international: PCT/EP2022/075613
(87) Numéro de publication internationale: WO 2023/046563

(56) Documents cités:
- DE-U1- 202015 009 206
- FR-A- 1 463 015
- US-A- 1 302 359
- US-A- 4 047 807

## Description

### Domaine technique :

La présente invention concerne le domaine des diaphragmes à iris.

### Technique antérieure :

Les objectifs des appareils photographiques et des caméras cinématographiques sont généralement équipés de diaphragmes circulaires transversalement à l'axe optique des lentilles. La circularité sur toutes les ouvertures est souhaitable si l'on veut s'accommoder de la qualité des objectifs constitués de lentilles sphériques avec le moins d'aberrations possible dans l'image enregistrée.

Pour réaliser ces diaphragmes, il est possible d'utiliser un simple trou sur une paroi interposée sur le trajet lumineux, ou, plusieurs trous placés sur un élément mobile permettent un réglage succinct de différent diamètre d'ouverture.

D'autres systèmes optiques nécessitant une plus grande compacité ou un très grand nombre d'ouvertures différentes utilisent le diaphragme à iris, qui permet un réglage continu entre sa pleine ouverture et sa fermeture maximale.

Un diaphragme à iris est constitué d'un ensemble de lamelles dont la tranche de chaque lamelle décrit des segments de courbes, l'ensemble des lamelles définissant une ouverture sous la forme d'un polygone régulier.

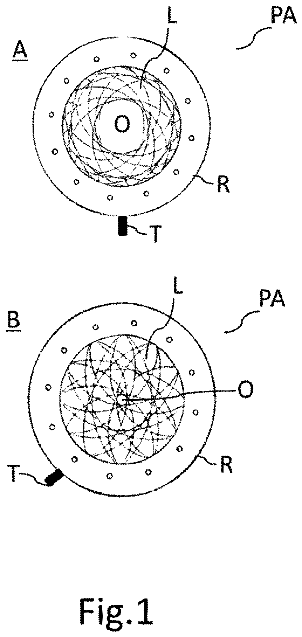

La figure 1 présente un diaphragme à iris PA de l'art antérieur avec une ouverture O selon une configuration A avec une ouverture plus ouverte que la configuration B. Le diaphragme à iris PA comprend une pluralité de lamelles L typiquement en métal ou en plastique. Afin de permettre le réglage de la dimension de l'ouverture, chaque lamelle est par exemple reliée à une rondelle R par une liaison pivot d'axe perpendiculaire au plan du diaphragme ou est déplaçable par translation par rapport à la rondelle R. Le déplacement contrôlé des lamelles permet de fermer ou d'ouvrir l'ouverture O. L'ouverture ou la fermeture du diaphragme à iris est typiquement contrôlée par un ergot T placé sur la tranche de la rondelle du diaphragme.

Le nombre et la forme des lamelles composant l'iris est variable. La forme de cette ouverture donnera la forme des taches du flou d'arrière-plan ou bokeh. Ainsi, les objectifs à grande ouverture et disposant d'un diaphragme à lames arrondies et nombreuses (8 ou 9) permettent des bokeh à l'aspect proche d'une forme circulaire et une transition plus franche avec la zone nette. Plus le nombre de lamelles est élevé, plus la forme des taches se rapprochera d'un disque parfait. À l'inverse, certains objectifs produisent des bokeh pentagonaux, ou hexagonaux, en fonction du nombre de lamelles qui forment le diaphragme de l'objectif. La forme du bokeh peut aussi être ovale, selon la conception optique de l'objectif, et notamment en cas d'utilisation d'un objectif anamorphique (par exemple dans le cas d'objectifs cinématographiques).

Le contrôle de la forme des bokehs et de leur orientation est important dans certaines applications (photographie et cinéma). Dans les diaphragmes de l'art antérieur, les formes tournent en fonction de l'ouverture du diaphragme. Cet effet est indésirable. Un autre système de diaphragme elliptique est divulgué par US1302359A.

L'invention vise à pallier certains problèmes de l'art antérieur. A cet effet, un objet de l'invention est un diaphragme à iris présentant une structure adaptée pour définir une ouverture elliptique produisant un bokeh dont la forme et l'orientation ne change pas en fonction de l'ouverture du diaphragme.

### Résumé de l'invention :

A cet effet, un objet de l'invention est un diaphragme à iris présentant un axe optique comprenant :
- une rondelle fixe,
- une rondelle mobile adaptée pour tourner autour de l'axe optique par rapport à la rondelle fixe et comprenant une pluralité n de rampes de guidage,
- une pluralité de n lamelles définissant une ouverture elliptique du diaphragme présentant un grand axe a et un petit axe b, chaque lamelle pouvant pivoter par rapport à la rondelle fixe autour d'un axe respectif, et comprenant un pion mobile respectif déplaçable dans une des rampes de guidage respective en prenant appui le long de la rampe de guidage respective,

- une rondelle de commande adaptée pour tourner autour de l'axe optique par rapport à la rondelle fixe et comprenant une rampe de commande dans laquelle un des pions mobiles, appelé pion de commande, est déplaçable en prenant appui le long de la rampe de commande,
- une forme de chaque rampe de guidage sur laquelle s'appuie le pion mobile respectif étant adaptée pour qu'une rotation de ladite rondelle de commande autour de l'axe optique entraine, via le pion de commande, une rotation de ladite rondelle mobile et un déplacement des pions mobiles dans les rampes de guidage, de manière à modifier une surface de l'ouverture elliptique, sans modifier une orientation du grand axe et du petit axe et sans modifier un ratio du grand axe sur le petit axe.

Selon un mode de réalisation préféré de l'invention, la rondelle fixe et la rondelle de commande sont configurées pour permettre la rotation de la rondelle mobile autour de l'axe optique dans un secteur angulaire prédéterminé.

Selon un mode de réalisation préféré de l'invention, la pluralité de lamelles est agencée entre la rondelle fixe et la rondelle mobile. De manière préférentielle, la rondelle mobile est agencée entre la rondelle de commande et la rondelle fixe.

Selon un mode de réalisation préféré de l'invention, les lamelles ont des formes différentes.

Selon un mode de réalisation préféré de l'invention, les rondelles sont configurées pour définir une dimension maximale du grand axe de ladite ouverture elliptique.

### Brève description des figures :

D'autres caractéristiques, détails et avantages de l'invention ressortiront à la lecture de la description faite en référence aux dessins annexés donnés à titre d'exemple et qui représentent, respectivement :
[Fig.1], une vue schématique d'un diaphragme à iris de l'art antérieur,
[Fig.2], un diaphragme à iris selon l'invention,
[Fig.3A], [Fig.3B], [Fig.3C], des vues de face, de profil et de perspective respectivement de la rondelle fixe du mode de réalisation M1 de l'invention
[Fig.4A], [Fig.4B], [Fig.4C], une vue de face de la rondelle fixe et des lamelles du mode de réalisation M1 pour différentes ouvertures du diaphragme,
[Fig.4D], une représentation des lamelles du mode de réalisation M1 pour différentes ouvertures du diaphragme,
[Fig.5A], [Fig.5B], [Fig.5C], une vue de face de la rondelle fixe RC et d'uniquement deux lamelles L1 et L2 parmi les 16 lamelles, du plus ouvert au plus fermé respectivement,
[Fig.6A], [Fig.6B], [Fig.6C] une vue de face et éclatée respectivement d'un empilement du diaphragme du mode de réalisation M1 pour différentes ouvertures,
[Fig.7A], [Fig.7B], une vue de face du diaphragme du mode de réalisation M1 pour deux ouvertures du diaphragme,
[Fig.7C] une vue éclatée du diaphragme du mode de réalisation M1.

Dans les figures, sauf contre-indication, les éléments sont à l'échelle.

### Description détaillée :

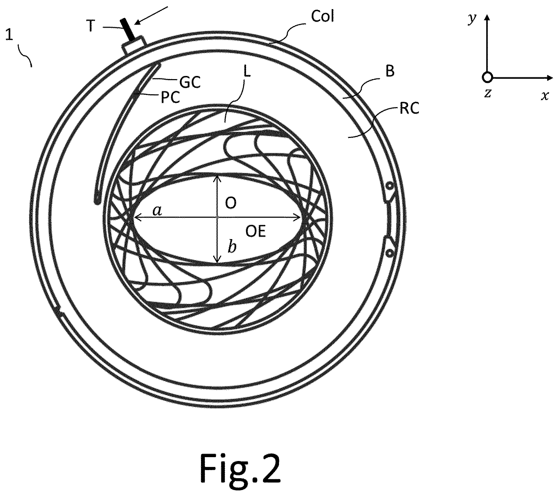

La figure 2 illustre schématiquement un diaphragme à iris 1 selon l'invention, particulièrement adapté pour des objectifs de caméra ou des objectifs de photographie. La configuration illustrée dans cette figure, appelée mode de réalisation M1 par la suite, est donnée à titre d'exemple non limitatif et pourra être modifié selon des variantes du évidentes pour l'homme l'art sans sortir du cadre de l'invention.

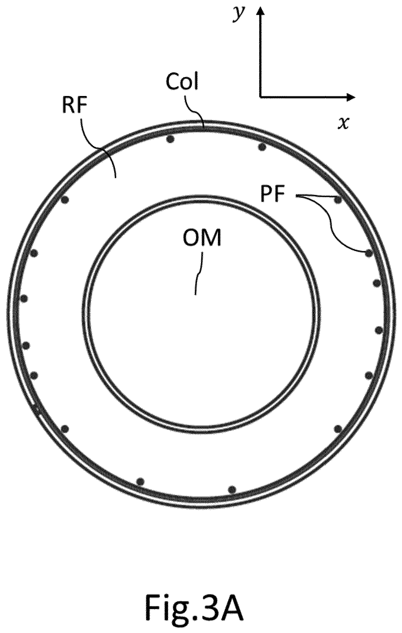

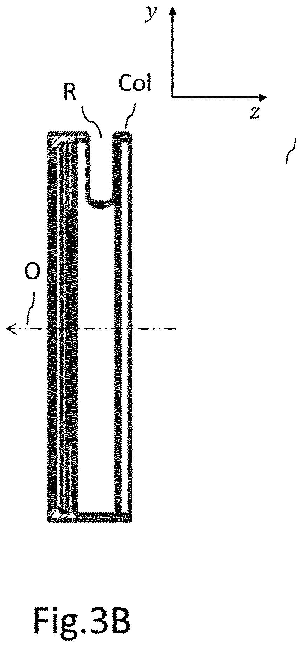

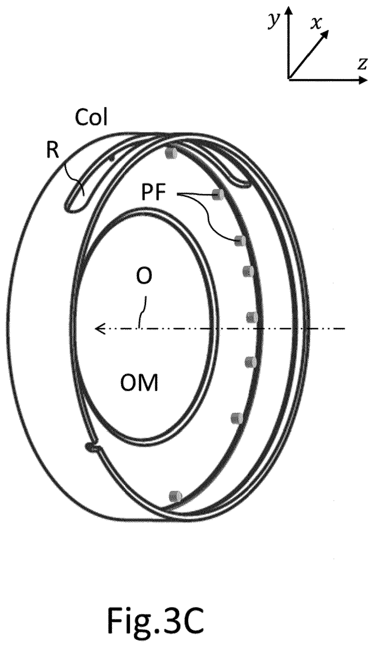

Le diaphragme 1 comprend une rondelle fixe RF (non visible en figure 2 mais représentée en figures 3A-3C). Cette rondelle fixe RF constitue le seul élément du diaphragme qui reste immobile par rapport à l'axe optique O du diaphragme. Il s'agit de l'élément par rapport auquel les autres pièces du diaphragme 1 vont se déplacer. Dans l'illustration de la figure 2, à titre d'exemple, l'axe optique O est perpendiculaire au plan xy du diaphragme et est selon la direction z.

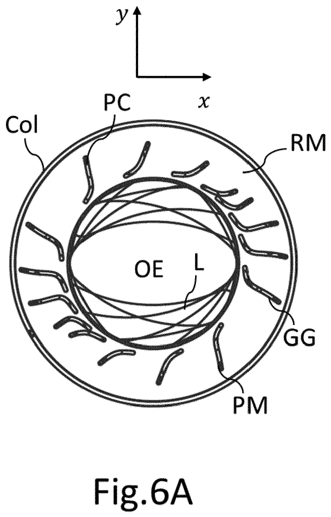

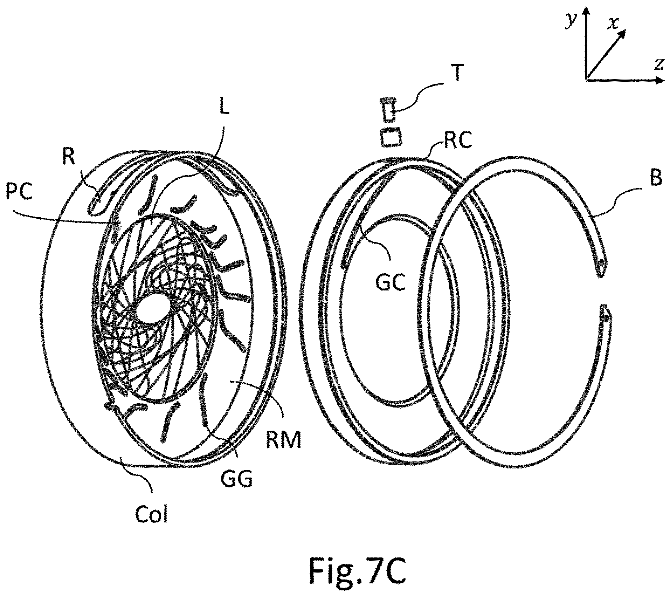

Le diaphragme comprend une rondelle mobile RM adaptée pour tourner autour de l'axe optique O par rapport à la rondelle fixe RF. La rondelle mobile RM n'est pas représentée dans la figure 2 mais est visible dans les figures 6A-6C et 7C. Comme cela sera expliqué plus loin, la rondelle mobile RM est l'élément du diaphragme qui permet d'assurer le maintien de la forme de l'ouverture lors de la fermeture ou l'ouverture du diaphragme 1. Pour cela, la rondelle mobile comprend une pluralité n de rampes de guidage GG (voir figure 6A-6C et 7C).

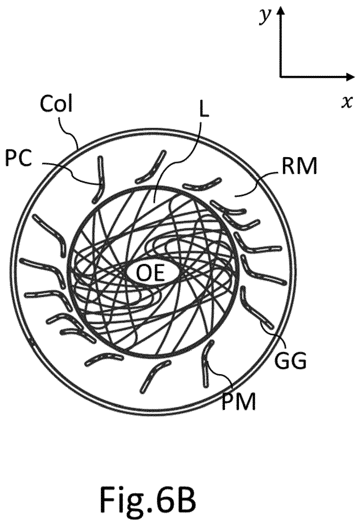

Le diaphragme comprend une pluralité de n lamelles L dont la tranche de chaque lamelle décrit des segments de courbes, l'ensemble des lamelles définissant une ouverture sous la forme d'un polygone régulier. Dans l'invention, les lamelles définissent une ouverture elliptique OE du diaphragme. L'ouverture elliptique présente un grand axe *a* et un petit axe b. Par « ouverture elliptique », on entend ici que la forme du polygone régulier définit par la lamelles est proche d'une ellipse. Compte tenu de la forme elliptique de l'ouverture OE, le bokeh obtenu à l'aide du diaphragme de l'invention est de forme elliptique lui aussi. Afin de pouvoir modifier la dimension de l'ouverture, dans le diaphragme de l'invention, chaque lamelle peut pivoter par rapport à la rondelle fixe autour d'un axe respectif. Ainsi, la rotation de chaque lamelle L par rapport à la rondelle fixe RF autour d'un axe respectif est réalisée par une liaison pivot respective reliant la rondelle fixe RF à la lamelle L. De plus chaque lamelle L comprend un pion mobile PM respectif déplaçable dans une des rampes de guidage GG respective en prenant appui le long de la rampe de guidage GG respective (non visible en figure 2 mais visible en figures 6A et 6B). Par « comprendre un pion », on entend que le pion mobile PM est solidaire de la lamelle L respective, ou autrement dit que le pion mobile PM est encastré dans la lamelle L respective.

Enfin, le diaphragme 1 comprend une rondelle de commande RC adaptée pour tourner autour de l'axe optique par rapport à la rondelle fixe RF. La rondelle de commande RC est l'élément du diaphragme qui permet d'entrainer la rotation de la rondelle mobile RM et donc le déplacement des pions mobiles PM. Pour cela, la rondelle de commande RC comprend une rampe de commande GC dans laquelle un des pions mobile PM, appelé pion de commande PC, est déplaçable en prenant appui le long de la rampe de commande GC. Ce pion de commande PC est donc un pion mobile PM plus long qui traverse une rampe de guidage GG de la rondelle mobile RM et s'appuie le long de la rampe de commande GC de la rondelle de commande RC. Il est donc déplaçable le long des deux rampes GG et GC. Ainsi, la rotation de la rondelle de commande RC entraine celui de la rondelle mobile RM via le pion de commande PC et donc le déplacement des pions mobiles PM dans les rampes de guidage GG. La disposition et le déplacement des différents éléments du diaphragme sont visibles dans les figures 3A à 7C.

Contrairement au diaphragme à iris de l'art antérieur, l'ouverture elliptique OE du diaphragme 1 de l'invention produit un bokeh dont le type de forme et l'orientation ne change pas en fonction de l'ouverture du diaphragme. Cela implique que la forme et l'orientation de l'ouverture elliptique OE reste identique quelle que soit l'ouverture du diaphragme. Pour cela, la forme de chaque rampe de guidage GG sur laquelle s'appuie le pion mobile PM respectif est adaptée pour que la rotation de la rondelle de commande RC autour de l'axe optique entraine, via le pion de commande PC, une rotation de ladite rondelle mobile RM et un déplacement des pions mobiles PM dans les rampes de guidage GG, de manière à modifier une surface de l'ouverture elliptique OE, sans modifier une orientation du grand axe *a* et du petit axe *b* et sans modifier un ratio du grand axe sur le petit axe *a*/*b.*

Il est entendu que l'invention n'est pas limitée aux formes des rampe de guidage illustrées dans les figures (figures 6A-6C par exemple), mais couvre toutes les formes de rampes de guidage tant qu'elles permettent d'obtenir l'effet recherché, à savoir le maintien de la forme et de l'orientation de l'ouverture elliptique. Au vu de la description de l'invention et des figures 2 à 8, l'homme de l'art saura adapter la forme des rampes de guidage et celle des lamelles sans nécessiter un nombre déraisonnable d'expérimentations. Le point clef de l'invention est, que l'utilisation des rampes de guidages comprises dans la rondelle mobile pour guider le déplacement des pions mobiles des lamelles et donc la rotation des lamelles, couplée à une rondelle de commande pour entrainer la rondelle mobile, permet de maintenir la forme et l'orientation de l'ouverture.

Selon un mode de réalisation préféré de l'invention, la rondelle fixe RC et la rondelle de commande RC sont configurées pour induire la rotation de la rondelle mobile autour de l'axe optique dans un secteur angulaire prédéterminé. A titre d'exemple non limitatif, dans le diaphragme du mode de réalisation M1 de la figure 2, la rondelle fixe RF comprend une collerette Col présentant une rainure R. De plus, le diaphragme comprend un ergot T solidaire de la rondelle de commande et déplaçable dans la rainure en prenant appui le long de la rainure. La longueur de la course de l'ergot T dans la rainure R fixe l'amplitude angulaire de rotation possible de la rondelle de commande RC et de la rondelle RM et donc limite l'ouverture et la fermeture atteignable de l'ouverture elliptique OE. La figure 2 illustre le fait que l'action de l'utilisateur sur l'ergot T, représenté par une flèche sur la figure 2, permet la rotation de la rondelle de commande et le déplacement du pion de commande dans la rampe de commande. Alternativement, selon un autre mode de réalisation, la rotation est réalisée par un bouton rotatif, par exemple déporté sur la collerette.

Le diaphragme de la figure 2 comprend en outre une bague B solidaire de la collerette et adaptée pour maintenir les différentes rondelles RF, RM et RC à proximité les unes des autres sans limiter la rotation des rondelles RC et RM par rapport à la rondelle RF. Plus précisément, la bague B interdit la translation des rondelles RC et RM le long de l'axe optique O par rapport à la rondelle fixe RF. La bague B est par exemple réalisée sous forme d'un circlips intérieur mis en place dans une gorge de la collerette Col.

Dans le mode de réalisation M1 de la figure 2, à titre d'exemple non limitatif, le grand axe *a* de l'ouverture elliptique OE est horizontal (selon la direction *x*)*.* Alternativement, selon un autre mode de réalisation, à titre d'exemple non limitatif, le grand axe *a* de l'ouverture elliptique OE est selon une direction différente de la direction *x* (par exemple selon la direction *y*).

Les rondelles RM, RC, RC sont réalisées dans un matériau diffusant pour la lumière visible, par exemple en aluminium anodisé et coloré en noirs, puis recouvertes d'un traitement lubrifiant noir mat qui réduit la lumière parasite.

Les figures 3A à 7C sont des représentations des différents éléments du diaphragme du mode de réalisation M1 illustré en figure 2. Comme expliqué précédemment, les représentations sont données à titre d'exemple non limitatif et le mode de réalisation M1 illustrée dans ces figures pourra être modifié selon des variantes évidentes pour l'homme l'art sans sortir du cadre de l'invention. Notamment, dans le mode de réalisation des figures 2 à 7C, seize lamelles avec chacune une rampe de guidage respective sont représentées. Alternativement, selon un autre mode de réalisation, un nombre de lamelles et de rampes de guidage différent de 16 est utilisé dans le diaphragme. Plus le nombre de lamelles et de rampes est élevé, plus la forme des taches se rapprochera d'une ellipse parfaite pour toutes les ouvertures du diaphragme 1. En outre, l'utilisation d'un nombre de rampes élevé permet plus aisément de maintenir une orientation du grand axe et du petit axe sans modifier un ratio du grand axe sur le petit axe. Pour cette raison, il est préférable d'avoir au moins 10 lamelles et rampes de guidages dans le diaphragme de l'invention.

Les figures 3A à 3C sont des vues de face, de profil et de perspective respectivement de la rondelle fixe RF du mode de réalisation M1. Dans ce mode de réalisation M1, la rondelle fixe RF comprend une collerette Col présentant une rainure R pour limiter la rotation de la rondelle de commande autour de l'axe optique dans un secteur angulaire prédéterminé via l'ergot T solidaire de la rondelle de commande. Comme expliqué précédemment, la rotation de chaque lamelle par rapport à la rondelle fixe autour d'un axe respectif est réalisée par une liaison pivot respective reliant la rondelle fixe à la lamelle. Dans le diaphragme du mode de réalisation M1, à titre d'exemple non limitatif les liaisons pivots sont réalisées via une pluralité *n* de pions fixes PF compris dans la rondelle fixe, chaque lamelle pouvant tourner autour d'un pion fixe respectif. Alternativement, dans un autre mode de réalisation, les pions fixes sont compris dans les lamelles et non pas dans la rondelle fixe. La rondelle RF comprend une ouverture centrale OM dans laquelle s'inscrit l'ouverture elliptique définie par les lamelles L.

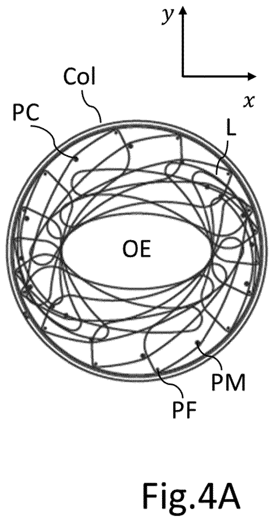

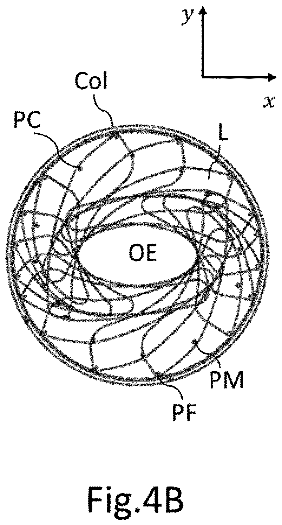

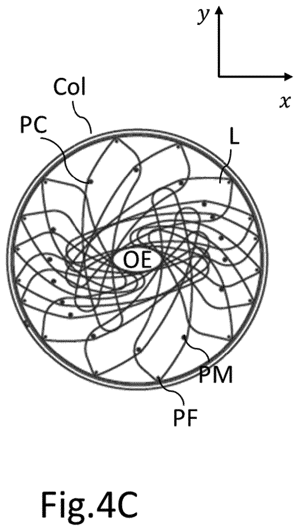

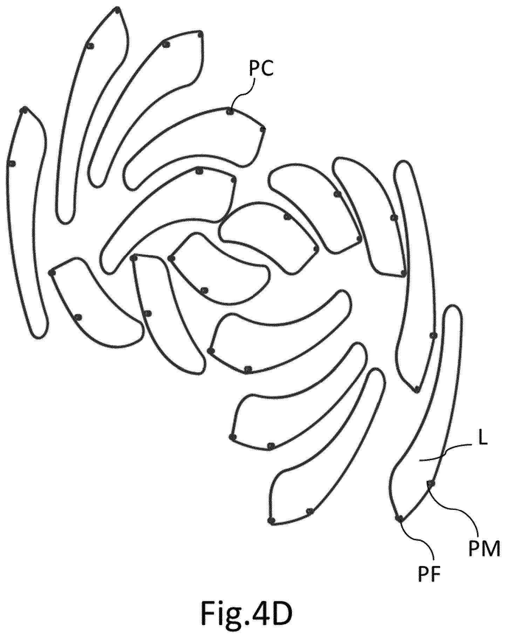

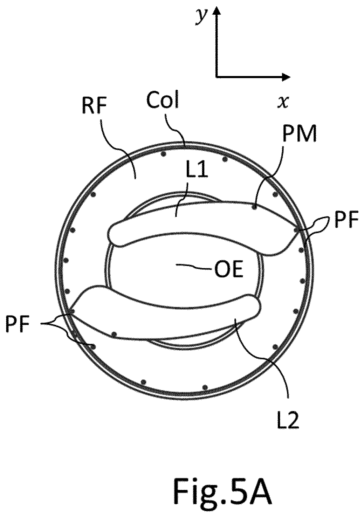

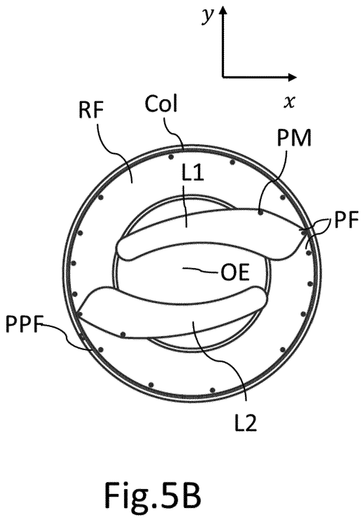

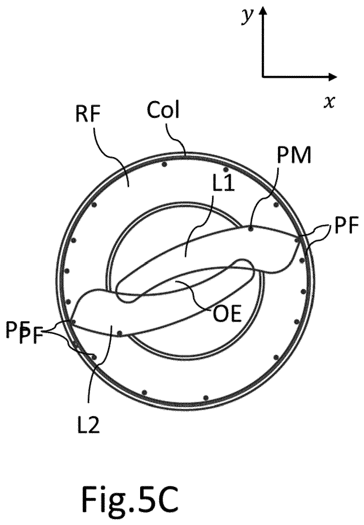

Les figures 4A à 4C illustrent une vue de face de la rondelle fixe RF et des lamelles L du mode de réalisation M1 pour différentes ouvertures du diaphragme (allant du plus ouvert pour la figure 4A vers le plus fermé pour 4C). Afin de visualiser plus clairement le mouvement des lamelles en fonction de l'ouverture du diaphragme, les figures 5A à 5C illustrent une vue de face de la rondelle fixe RC et d'uniquement deux lamelles L1 et L2 parmi les 16 lamelles, pour différentes ouvertures du diaphragme (allant du plus ouvert pour la figure 5A vers le plus fermé pour 5C). De préférence, les lamelles L sont agencées de manière à s'étendre sensiblement dans un plan perpendiculaire à l'axe optique (et donc parallèle au plan *xy* de la rondelle fixe RF). En pratique, les lamelles L se chevauchent et glissent les unes sur les autres. Chaque lamelle L s'étend dans le plan *xy.* Leur épaisseur est très faible par rapport à leur dimensions dans le plan *xy.* On peut considérer que l'ouverture elliptique OE s'étend également dans le plan *xy.* Les lamelles L, les pions mobiles PM, les pions fixes PF et le pion de commande PC du mode de réalisation M1 sont visibles en figure 4D. Grâce à la figure 4D, on observe que les lamelles ne possèdent pas tous la même forme afin que les lamelles puissent définir une ouverture de forme elliptique sur toute la gamme d'ouverture possible du diaphragme. Plus précisément, dans le mode de réalisation M1, les lamelles sont symétriques deux à deux par rotation autour de l'axe optique.

Ces figures 4A à 5C permettent d'observer la manière dont les lamelles pivotent autour de l'axe formé par chacun des pions fixes PF en fonction de l'ouverture, ce pivotement étant basé sur le déplacement des pions mobiles selon les rampes de guidage GG (non représentées en figures 4A-5C).

Dans les figures 4A-4C, le pion commande PC, qui correspond à un pion mobile plus long que les autres pions mobiles, est représenté. Comme expliqué précédemment, c'est le déplacement de la rondelle de commande RC qui va entrainer le déplacement du pion PC dans la rampe de commande GC.

Dans le mode de réalisation M1, partiellement illustré en figure 4A à 5C, les lamelles sont empilées en vis-à-vis avec la rondelle fixe au sein du diaphragme. Cette arrangement permet que les liaisons pivots respectives des lamelles -via les pions fixes PF entre la rondelle fixe et les lamelles- soient de plus petite hauteur et donc plus solides.

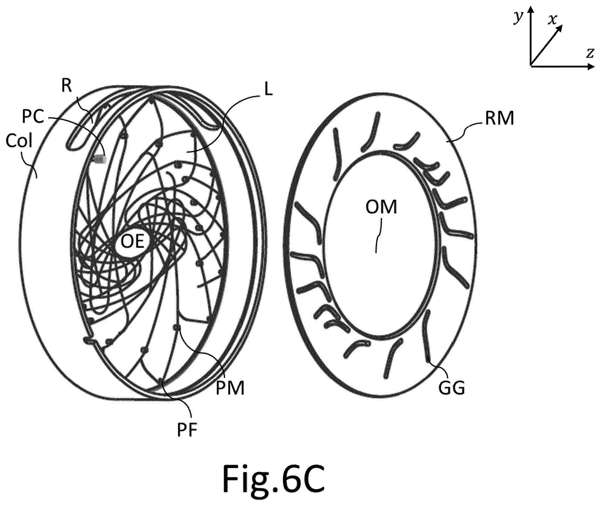

Les figures 6A et 6B illustrent une vue de face d'un empilement du diaphragme du mode de réalisation M1 formé par la rondelle fixe RF, puis les lamelles L et puis la rondelle mobile RM, pour deux ouvertures du diaphragme (plus ouvert pour la figure 6A et le plus fermé pour 6B). La figure 6C représente une vue en perspective éclatée de cet empilement. Comme le montrent ces figures, le déplacement de chaque lamelle par rapport à la rondelle fixe n'a pas le même impact sur la modification de la forme et de l'orientation de l'ouverture elliptique. Par exemple, de par leur position, le déplacement de certaines lamelles modifiera plus le grand axe *a* que le déplacement d'autres lamelles. C'est pourquoi, dans l'invention dans le mode de réalisation M1 et dans l'invention plus généralement, la forme de chaque rampe de guidage est adaptée en fonction de la position et la forme de la lamelle associée à la rampe de guidage.

Dans l'empilement du diaphragme du mode de réalisation M1, partiellement illustré en figure 6A à 6C, la rondelle mobile est agencée entre la rondelle de commande et la rondelle fixe et les lamelles sont agencées entre la rondelle mobile et la rondelle fixe. Cette conception mécanique est la plus simple pour permettre aux lamelles d'être en liaison pivot avec la rondelle fixe et pour que les pions mobiles des lamelles puisse se déplacer dans la rampe de guidage. En outre, cette conception permet de protéger partiellement les lamelles par les rondelles RM et RF.

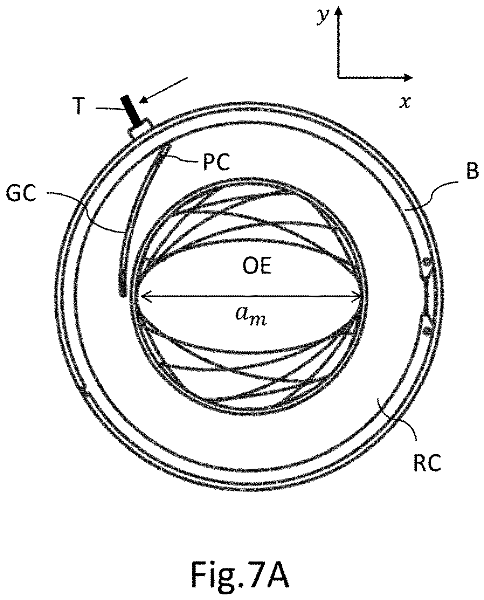

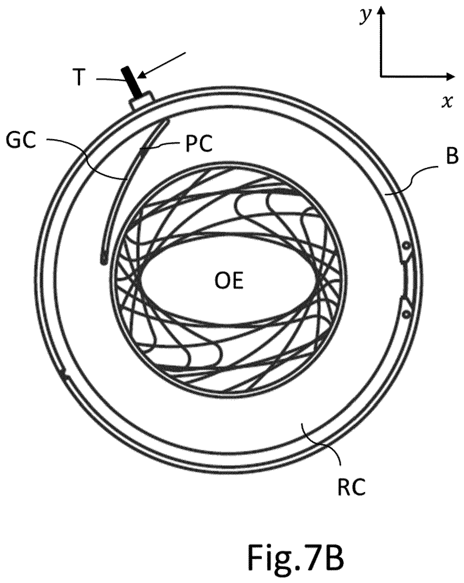

Les figures 7A et 7B illustrent une vue de face du diaphragme du mode de réalisation M1 pour deux ouvertures du diaphragme (plus ouvert pour la figure 7A et plus fermé pour 7B). Le diaphragme du mode de réalisation M1 comprend un empilement formé par la rondelle fixe RF, des lamelles L, de la rondelle mobile RM du mode de réalisation M1, de la rondelle de commande et d'une bague B adaptée pour maintenir l'empilement sous la collerette Col. La figure 7C représente une vue en perspective et partiellement éclatée des éléments du diaphragme du mode de réalisation M1.

Pour que la forme de l'ouverture formée par le diaphragme reste elliptique de l'ouverture la plus grande à la plus petite, il faut que l'ouverture OE formée par les lamelles ne soit pas tronquée par une des rondelles RC, RM, RF. C'est à dire qu'il faut que les rondelles RC, RF et RM présentent une ouverture centrale telle que, au moins une ouverture centrale d'une des rondelles définit une dimension maximale *aₘ* du grand axe *a* de l'ouverture elliptique. Dans ce mode de réalisation M1, la rainure R limite la course de l'ergot T de façon à ce que la rotation de la rondelle de commande RC autour de l'axe optique soit réalisée dans un secteur angulaire prédéterminé et tel que *aₘ* soit égal au diamètre de l'ouverture des rondelles RC, RF et RM. Cette dimension maximale est illustrée en figure 7A qui correspond à la configuration la plus ouverture du diaphragme, soit lorsque le grande axe *a* = *aₘ*.

L'empilement des différents éléments au sein du diaphragme du mode de réalisation M1, illustré en figure 7A-7C, est tel que la rondelle mobile est agencée entre la rondelle de commande et la rondelle fixe. Cet agencement est préféré car il s'agit de la conception la plus simple permettant le déplacement de la rondelle de commande et de la rondelle mobile sans être bloqué par les liaisons pivot reliant les lamelles et la rondelle fixe. Alternativement, selon un autre mode de réalisation, l'empilement des éléments au sein du diaphragme est diffèrent de celui illustrée en figure 7A-7C. Cependant, cet autre mode de réalisation n'est pas préféré car il complexifie grandement la conception des différents éléments.

## Revendications

1. Diaphragme à iris (1) présentant un axe optique (O) comprenant :
- une rondelle fixe (RF),
- une rondelle mobile (RM) adaptée pour tourner autour de l'axe optique par rapport à la rondelle fixe et comprenant une pluralité n de rampes de guidage (GG),
- une pluralité de n lamelles (L) définissant une ouverture elliptique (OE) du diaphragme présentant un grand axe (a) et un petit axe (b), chaque lamelle pouvant pivoter par rapport à la rondelle fixe autour d'un axe respectif, et comprenant un pion mobile (PM) respectif déplaçable dans une des rampes de guidage (GG) respective en prenant appui le long de la rampe de guidage respective,
- une rondelle de commande (RC) adaptée pour tourner autour de l'axe optique par rapport à la rondelle fixe et comprenant une rampe de commande (GC) dans laquelle un des pions mobiles, appelé pion de commande (PC), est déplaçable en prenant appui le long de la rampe de commande,
une forme de chaque rampe de guidage (GG) sur laquelle s'appuie le pion mobile (PM) respectif étant adaptée pour qu'une rotation de ladite rondelle de commande (RC) autour de l'axe optique entraine, via le pion de commande (PC), une rotation de ladite rondelle mobile (RM) et un déplacement des pions mobiles (PM) dans les rampes de guidage (GG), de manière à modifier une surface de l'ouverture elliptique (OE), sans modifier une orientation du grand axe et du petit axe et sans modifier un ratio du grand axe sur le petit axe.

2. Diaphragme selon la revendication précédente, dans lequel la rondelle fixe et la rondelle de commande sont configurées pour permettre la rotation de la rondelle mobile autour de l'axe optique dans un secteur angulaire prédéterminé.

3. Diaphragme selon l'une quelconque des revendications précédentes, dans lequel la pluralité de lamelles est agencée entre la rondelle fixe et la rondelle mobile.

4. Diaphragme selon la revendication précédente, dans lequel la rondelle mobile est agencée entre la rondelle de commande et la rondelle fixe.

5. Diaphragme selon l'une quelconque des revendications précédentes, dans lequel les lamelles ont des formes différentes.

6. Diaphragme selon l'une quelconque des revendications précédentes, dans lequel les rondelles sont configurées pour définir une dimension maximale du grand axe de ladite ouverture elliptique.

## Patentansprüche

1. Irisblende (1), aufweisend eine optische Achse (O), umfassend:
- einen feststehenden Ring (RF),
- einen mobilen Ring (RM), der dazu geeignet ist, sich in Bezug auf den feststehenden Ring um die optische Achse zu drehen und eine Vielzahl *n* von Führungsbahnen (GG) aufweist,
- eine Vielzahl von *n* Lamellen (L), die eine elliptische Öffnung (OE) der Blende mit einer großen Achse (a) und einer kleinen Achse (b) definieren, wobei jede Lamelle in Bezug auf den feststehenden Ring um eine jeweilige Achse schwenken kann, und einen jeweiligen mobilen Stift (PM) umfassen, der in einer jeweiligen der Führungsbahnen (GG) verschiebbar ist, indem er entlang der jeweiligen Führungsbahn abgestützt wird,
- einen Steuerring (RC), der dazu geeignet ist, sich in Bezug auf den feststehenden Ring um die optische Achse zu drehen und eine Steuerbahn (GC) umfasst, in der einer der mobilen Stifte, der als Steuerstift (PC) bezeichnet wird, verschiebbar ist, indem er entlang der Steuerbahn abgestützt wird,
wobei eine Form jeder Führungsbahn (GG), auf der der jeweilige mobile Stift (PM) abgestützt wird, dazu geeignet ist, dass eine Drehung des Steuerrings (RC) um die optische Achse über den Steuerstift (PC) eine Drehung des mobilen Rings (RM) und eine Verschiebung der mobilen Stifte (PM) in den Führungsbahnen (GG) mit sich bringt, um eine Oberfläche der elliptischen Öffnung (OE) zu modifizieren, ohne eine Ausrichtung der großen Achse und der kleinen Achse zu modifizieren und ohne ein Verhältnis der großen Achse zur kleinen Achse zu modifizieren.

2. Blende nach dem vorhergehenden Anspruch, wobei der feststehende Ring und der Steuerring dafür konfiguriert sind, die Drehung des mobilen Rings um die optische Achse in einem vorbestimmten Winkelsektor zu ermöglichen.

3. Blende nach einem der vorhergehenden Ansprüche, wobei die Vielzahl von Lamellen zwischen dem feststehenden Ring und dem mobilen Ring angeordnet ist.

4. Blende nach dem vorhergehenden Anspruch, wobei der mobile Ring zwischen dem Steuerring und dem feststehenden Ring angeordnet ist.

5. Blende nach einem der vorhergehenden Ansprüche, wobei die Lamellen unterschiedliche Formen aufweisen.

6. Blende nach einem der vorhergehenden Ansprüche, wobei die Ringe dafür konfiguriert sind, eine maximale Abmessung der großen Achse der elliptischen Öffnung zu definieren.

## Claims

1. An iris diaphragm (1) having an optical axis (O), comprising:
- a fixed ring (RF),
- a mobile ring (RM) designed to rotate about the optical axis with respect to the fixed ring and comprising a plurality *n* of guideways (GG),
- a plurality of *n* blades (L) defining an elliptical aperture (OE) of the diaphragm having a major axis (a) and a minor axis (b), each blade being able to pivot with respect to the fixed ring about a respective axis and comprising a respective mobile pin (PM) able to move in a respective one of the guideways (GG) by bearing along the respective guideway,
- a control ring (RC) designed to rotate about the optical axis with respect to the fixed ring and comprising a control guideway (GC) in which one of the mobile pins, referred to as control pin (PC), is able to move by bearing along the control guideway,
a shape of each guideway (GG) on which the respective mobile pin (PM) bears being designed so that a rotation of said control ring (RC) about the optical axis gives rise, via the control pin (PC), to a rotation of said mobile ring (RM) and a movement of the mobile pins (PM) in the guideways (GG) so as to modify a surface of the elliptical aperture (OE) without modifying an orientation of the major axis and of the minor axis and without modifying a ratio of the major axis to the minor axis.

2. The diaphragm according to the preceding claim, wherein the fixed ring and the control ring are configured to allow the mobile ring to rotate about the optical axis in a predetermined angular sector.

3. The diaphragm according to any one of the preceding claims, wherein the plurality of blades is arranged between the fixed ring and the mobile ring.

4. The diaphragm according to the preceding claim, wherein the mobile ring is arranged between the control ring and the fixed ring.

5. The diaphragm according to any one of the preceding claims, wherein the blades have different shapes.

6. The diaphragm according to any one of the preceding claims, wherein the rings are configured to define a maximum dimension of the major axis of said elliptical aperture.
